# FASCICULE DE BREVET EUROPEEN

(11) **EP 0 778 958 B1**
(45) Date de publication et mention de la délivrance du brevet: **28.10.1998**
(21) Numéro de dépôt: 95929144.4
(22) Date de dépôt: 29.08.1995
(51) Int. Cl.: G02B 23/14, G01S 5/16, G05D 1/00, G01C 21/02

(54) **SYSTEME DE REPERAGE D'ORIENTATION D'UN INSTRUMENT D'OBSERVATION**
VORRICHTUNG ZUM AUSRICHTEN EINES BEOBACHTUNGSINSTRUMENTES
ORIENTATION LOCATING SYSTEM FOR AN OBSERVATION INSTRUMENT

(30) Priorité: 29.08.1994 FR 9410368
(43) Date de publication de la demande: 18.06.1997
(73) Titulaire: CENTRE NATIONAL D'ETUDES SPATIALES, F-75039 Paris Cedex 01 (FR)
(72) Inventeur: DUCHON, Paul, F-31810 Venerque (FR); OTRIO, Georges, F-31650 Auzielle (FR)
(74) Mandataire: Ilgart, Jean-Christophe
(86) Numéro de dépôt international: FR9501130
(87) Numéro de publication internationale: WO9607120

(56) Documents cités:
- US-A- 4 123 164
- US-A- 4 154 532
- US-A- 4 187 422

## Description

L'invention concerne des systèmes de répérage d'orientation d'un instrument d'observation.

Elle constitue un perfectionnement d'une demande de brevet de titre analogue et des mêmes inventeurs, déposée en France sous le numéro d'enregistrement 93 14872 et qui décrivait un système formé en particulier de l'instrument d'observation, d'une source d'un motif lumineux, solidaire de l'instrument, d'un système de renvoi de la lumière de la source et d'un capteur de la lumière du motif. Le système de renvoi était formé d'au moins un miroir qui avait pour fonction de diriger la lumière du motif lumineux vers le capteur de lumière, qui était muni d'une référence d'orientation. Il pouvait en particulier s'agir d'un capteur stellaire qui détectait en même temps que le motif la lumière d'une étoile. La comparaison des positions des images du motif et de l'étoile donnait l'écart angulaire entre la direction de l'étoile et la direction d'émission du motif lumineux avant le système de renvoi. On en déduisait l'orientation de l'instrument. Dans d'autres conceptions, le capteur de lumière impressionné par le motif était solidaire d'un capteur stellaire ou autre pour fournir la référence, ce qui donnait le même résultat. Un capteur stellaire était cependant préféré pour donner la référence d'orientation à cause de l'immobilité des étoiles dans un repère fixe et de la netteté de leur aspect. Et surtout, on préfère mesurer la direction de visée par rapport aux étoiles pour une meilleure précision.

La préférence pour un capteur stellaire s'explique d'autant mieux que l'invention antérieure trouvera surtout emploi dans des véhicules spatiaux tels que les satellites, les sondes interplanétaires ou les stations spatiales qui sont garnis d'instruments d'observation d'astres tels que la Terre. Il en va de même de celle-ci.

La connaissance très précise de la direction de l'axe de visée d'un instrument d'observation est essentielle si on veut localiser convenablement l'endroit observé. Actuellement, on sait localiser pratiquement parfaitement un satellite en orbite (avec des incertitudes de 10 à 100 m pour le système GPS et seulement 0,5 à 40 m pour le système DORIS selon les conditions), alors que l'orientation globale de l'axe de visée des instruments d'observation n'est connue en pratique qu'avec une incertitude de 100 à 200 secondes d'arc au mieux, ce qui correspond à environ 400 à 800 m d'incertitude de position au sol pour un satellite à 800 km de hauteur. Bien que cette incertitude d'orientation de visée soit faible en elle-même, elle contribue à presque toute l'incertitude de localisation et on désire donc la réduire.

On rencontre en pratique trois catégories d'instruments. Les premiers sont fixes sur le véhicule, qu'il faut donc tourner (dépointer) en entier pour que l'instrument voulu soit orienté dans la direction souhaitée. Cette conception est peu appréciée à cause en particulier de la dépense d'énergie nécessaire. L'incertitude de l'orientation de l'axe de visée de l'instrument dépend alors surtout du montage de l'instrument sur le véhicule, et elle peut être accrue par des perturbations telles que les vibrations ou les déformations dues aux échauffements localisés produits sur une seule face du véhicule par le rayonnement solaire. Les deux autres catégories d'instruments comprennent donc les instruments équipés de mécanismes pour orienter l'instrument sur le véhicule, et, ce qui est beaucoup plus fréquent actuellement, les instruments fixes sur le véhicule mais munis de miroirs de Changement de visée qui sont placés devant le champ d'observation de l'instrument et modifient à volonté sa direction de visée quand ils sont tournés. Les axes de visée sont alors dirigés beaucoup plus simplement. Dans tous les cas, les mécanismes mobiles ou les miroirs sont responsables d'incertitudes supplémentaires d'orientation.

Le document US-A-4 187 422 décrit un système de calibration d'orientation d'un capteur d'étoiles en projetant un motif lumineux par une source solidaire du capteur vers un prisme qui réfléchit l'image du motif sur le capteur ; la position de l'image sur le capteur donne l'orientation de ce dernier.

Dans la demande précédente, on montrait que les rayons lumineux émis par la source, émis à une orientation connue par rapport à l'axe de visée (en principe parallèlement à lui) et réfléchis par le système de renvoi vers le capteur de lumière, permettaient d'évaluer avec une précision bien meilleure la direction de l'axe de visée, au point que l'incertitude de la localisation au sol n'était plus que de quelques dizaines de mètres.

L'invention a pour objet un système de repérage d'orientation d'un instrument d'observation qui reprend un principe utilisé dans la demande précédente, à savoir la matérialisation de l'axe de visée de l'instrument par un faisceau lumineux apte à former un motif lumineux sur une surface et qui est dévié vers un capteur lumineux, mais une estimation au moins aussi précise de l'axe de visée est obtenue avec l'invention grâce à des dispositifs optiques spécialement adaptés à cet appareillage et qui sont en particulier largement insensibles à des déplacements de position ou d'orientation consécutifs à la calibration préliminaire du système.

Le système comprend alors une source de lumière solidaire de l'instrument émettant un motif lumineux au plan focal de l'instrument, un système de renvoi de lumière à miroirs, et un capteur de lumière muni d'une référence d'orientation, le système de renvoi étant conçu pour transmettre la lumière de la source au capteur, les miroirs comprenant un dièdre à deux facettes sur lesquelles la lumière de la source est successivement réfléchie, caractérisé en ce que le système de repérage comprend un miroir de changement de visée tournant devant l'instrument, et en ce que le dièdre est solidaire du miroir de changement de visée tournant devant l'instrument les facettes réfléchissantes du dièdre faisant un angle droit et se joignant par une arête perpendiculaire au plan du miroir de changement de visée. Des perfectionnements sont encore possibles avec ce groupe de réalisation.

On va à présent décrire l'invention plus en détail à l'aide des figures suivantes, annexées à titre illustratif et non limitatif :
- la figure 1 est une coupe de côté du plan focal de l'instrument d'observation,
- la figure 2 est une vue de face du plan focal de l'instrument,
- la figure 3 est une vue d'un système de repérage partiel avec un instrument d'observation fixe,
- la figure 4 représente une variante d'exécution,
- la figure 5 illustre un dispositif optique à l'avant d'un capteur de lumière,
- la figure 6 illustre un procédé de reconnaissance d'axe de visée,
- la figure 7 représente un système de repérage complet,
- la figure 8 représente un système de repérage conjoint à un miroir de changement de visée conforme à l'invention,
- les figures 9 et 9A illustrent la construction du dièdre,
- la figure 10 illustre une variante de la figure 3,
- et la figure 11 représente partiellement un système de repérage perfectionné pour un système à miroir de changement de visée.

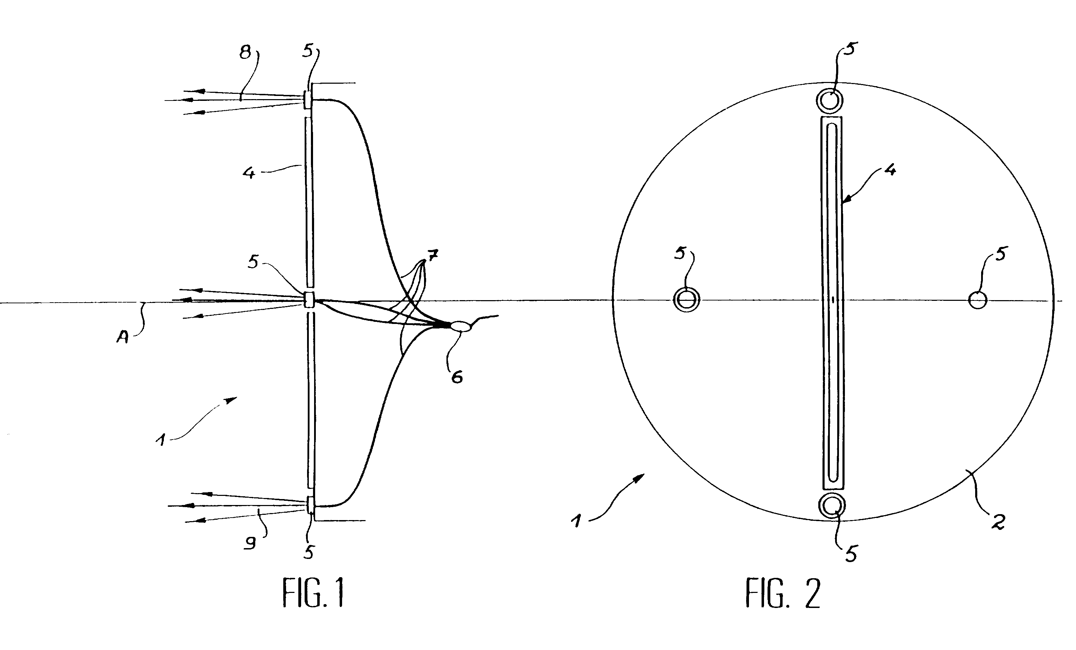

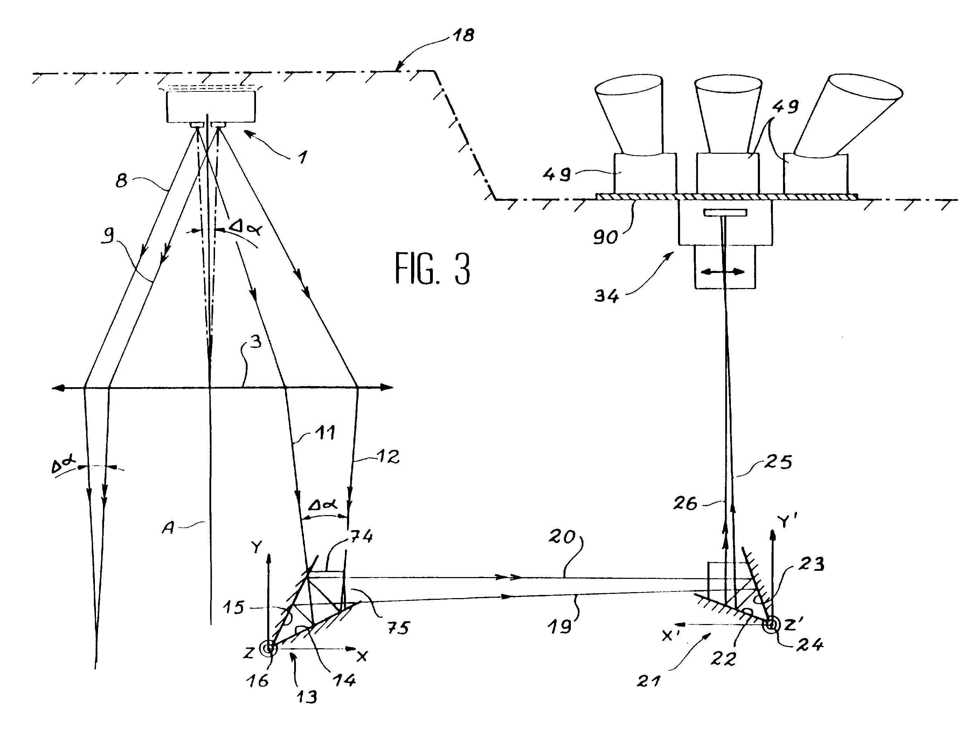

On représente sur les figures 1 et 2 le plan focal de l'instrument d'observation et la source lumineuse qui lui sert de référence d'orientation en matérialisant son axe de visée A. L'instrument 1 est terminé par une face avant 2 lisse qui coïncide avec le plan focal d'un système optique 3 (représenté à la figure 3) qui précède l'instrument 1 et s'étend dans son champ d'observation. Le système optique 3 est symbolisé par une lentille de focalisation mais peut comprendre tous les éléments usuels combinés à volonté. Une barrette de détecteurs 4 qui constitue ici la partie réceptrice de l'instrument 1 est placée à travers la face avant 2.

La source lumineuse est ici composée de quatre points 5 disposés en losange sur la face avant 2, autour de la barrette de détecteurs 4. On a vu dans la demande précédente qu'une source ponctuelle unique ne suffisait pas, car elle ne permettait pas de constater certaines rotations de l'instrument 1 et en particulier les rotations autour de son axe d'émission, mais que deux sources suffisaient et qu'un plus grand nombre pouvait être souhaitable pour obtenir une précision meilleure. Une diode 6 unique peut suffire à la production de tous ces points lumineux 5, à condition de la placer derrière un faisceau de fibres optiques 7 qui la relie à chacun des points 5. On peut utiliser une diode 6 électroluminescente ou une diode à effet de laser, cette dernière étant préférable car elle fournit des rayons lumineux plus fins et de longueur d'onde moins dispersée. Une longueur d'onde de 0,95 µm peut être proposée ; les points lumineux 5 sont très fins, de 20 µm de diamètre par exemple, et la lumière sera émise sous forme de faisceaux sensiblement parallèles de faible divergence qu'on peut assimiler à de simples rayons lumineux.

La figure 3 montre que ces rayons 8 et 9 sont défocalisés quand ils ont traversé le système optique 3 et forment alors des faisceaux 11 et 12 élargis qui occupent à peu prés le même volume. Seuls deux faisceaux de rayons lumineux sont représentés sur la figure, mais il y en a en réalité autant que de points lumineux 5. Les faisceaux ont une légère différence d'orientation Δα, qui peut être de quelques fractions de degré et est égale à celle des rayons lumineux qui leur ont donné naissance ; cette différence d'orientation Δα est exagérée sur la figure 3, de même que la divergence des rayons lumineux 8 et 9.

Un dièdre 13 optique est placé sur le chemin des faisceaux 11 et 12 pour en intercepter une portion. Il est composé de deux facettes réfléchissantes 14 et 15 successivement atteintes par les portions interceptées des deux faisceaux 11 et 12, et ces facettes sont réunies par une arête 16 perpendiculaire à l'axe de visée A de l'instrument 1. Le dièdre 13 est fixé à un véhicule spatial 18 comme l'instrument 1.

Les portions des faisceaux 11 et 12 qui sont interceptées par le dièdre 13 sont donc réfléchies successivement sur les facettes 14 et 15 et renvoyées en formant des faisceaux réfléchis 19 et 20. Les facettes 14 et 15 sont dirigées l'une contre l'autre en formant un anale de 45°. Cette forme particulière présente des propriétés remarquables qu'il importe de bien saisir. Tout d'abord, une rotation accidentelle du dièdre 13 autour de l'axe Z de l'arête 16 ne modifie en rien l'orientation des faisceaux réfléchis 19 et 20. Une translation àu dièdre 13 suivant les axes X, Y (à 22,5° des facettes 14 et 15) et Z n'a pas non plus d'effet sur cette orientation. Quant aux rotations du dièdre 13 autour des axes X et Y, elles ont pour seul effet de faire tourner les faisceaux réfléchis 19 et 20 dans un plan parallèle au plan des axes X et Z. Cette propriété est vérifiée rigoureusement pour les rotations autour de l'axe Y et avec une petite erreur, négligeable pour les petites variations de rotation qu'on rencontrera en pratique autour de l'axe X, car cette erreur est du deuxième ordre (une rotation supplémentaire de 10⁻⁶ radian des faisceaux réfléchis est produite pour une rotation de 10⁻³ radian du dièdre 13) .

Les faisceaux réfléchis 19 et 20 parviennent ensuite à un second dièdre 21 semblable au précédent, fixé au véhicule spatial 18 et composé de deux facettes 22 et 23 dirigées l'une vers l'autre à 45°, qui les réfléchissent successivement selon des faisceaux de retour 25 et 26 vers un capteur d'alignement 34.

Ces facettes 22 et 23 sont à 22,5° d'axes X' et Y' respectivement opposé à X et parallèle à Y ; elles se joignent par une arête 24 confondue avec un axe parallèle à Z et àe sens opposé. Le second dièdre 21 a les mêmes propriétés optiques que le premier puisqu'il est de même forme, et en particulier les propriétés de stabilité de direction du rayonnement réfléchi. Comme les facettes sont à 45°, les rayons réfléchis par les dièdres 13 et 21 sont à angle droit avec les rayons incidents. On s'aperçoit qu'une rotation au premier dièdre 13 autour de l'axe X ou Y, qui a pour conséquence une rotation des faisceaux réfléchis 19 et 20 autour d'un axe parallèle à l'axe Y, aura le même effet qu'une rotation du second dièdre 21 autour de l'axe X' ou Y' sur l'orientation des faisceaux de retour 25 et 26, opposés aux faisceaux 11 et 12 et parfaitement parallèles à eux quand les dièdres 13 et 21 sont placés avec exactitude et qu'ils ne pourront être déviés que par des rotations dans un plan unique, perpendiculaire à la figure, ou parallèle aux plans définis par les axes Y et Z, ou Y' et Z'.

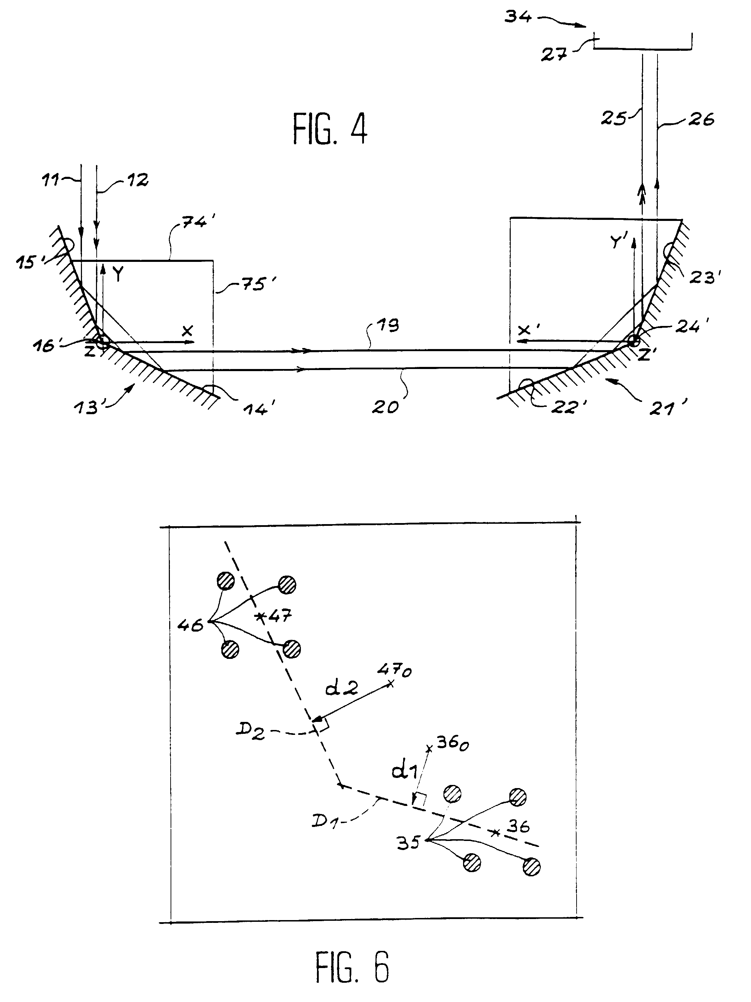

Une conception équivalente est représentée à la figure 4 : les dièdres 13 et 21 sont remplacés par des dièdres 13' et 21' dont les facettes 14' et 15', ou 22' et 23', font toujours des angles de 22,5° avec des axes X, Y, X' ou Y' semblables à ceux de la figure 3, mais les plans des facettes font ici des angles de 135° entre eux. Les propriétés optiques des dièdres 13' et 21' sont les mêmes que celles des dièdres 13 et 21, et le résultat sur les faisceaux réfléchis 19, 20 et de retour 25, 26 est le même ; la seule différence est que les réflexions sur les facettes 15' et 23' précédent celles sur les facettes 14' et 22'.

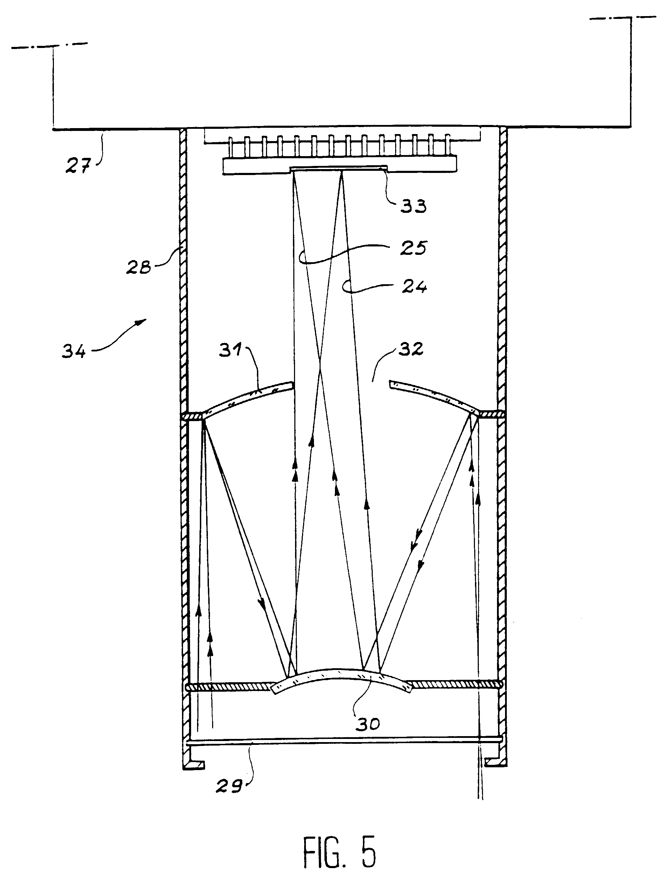

Le capteur d'alignement 34 peut être d'un genre bien adapté à la mesure de faibles champs de vue (par exemple un angle solide de quatre degrés de côté). Comme on le voit à la figure 5, son boîtier 27 est précédé d'une enveloppe cylindrique 28 à l'entrée de laquelle on trouve un filtre 29 qui ne laisse passer que les longueurs d'onde produites par la diode 6. Une partie des faisceaux de retour 25 et 26 passe autour d'un miroir secondaire 30 occupant le centre du boîtier 27 mais est réfléchie vers lui par un miroir primaire 31 qui commence à les focaliser. Une seconde focalisation est produite par le miroir secondaire 30, qui renvoie les faisceaux de retour 25 et 26 vers le miroir primaire 31, mais en les faisant en réalité passer par un trou central 32 de celui-ci.

Les faisceaux de retour 25 et 26 arrivent finalement à un réseau de détecteurs 33 en matrice carrée qui constitue l'élément sensible du capteur d'alignement 26. Ils sont alors à peu près focalisés et forment un motif de points lumineux 35 qui comprend le même nombre de points que celui de la source lumineuse. La perte de lumière défocalisée provenant de la lumière qui échappe aux dièdres 13 et 21 et aux miroirs 31 et 32, ou qui est absorbée par eux, ne produit en effet au'un affaiblissement du motif lumineux 35 mais ne le déforme pas. Le seul effet détecté correspond aux orientations des rayons lumineux 8 et 9 qui sont choisies pour que les faisceaux 11 et 12, 19 et 20, et 25 et 26 convergent sur le réseau de détecteurs 33, dont la surface est réduite.

Si les points lumineux 5 sont symétriques par rapport à l'axe de visée A, ainsi que les directions de leurs rayons 8 et 9, un rayon émis dans l'axe de visée et réfléchi par les dièdres 13 et 21 aboutirait au centre du motif de points lumineux 35, c'est-à-dire au point 36.

Un système électronique intégré au capteur d'alignement 34 mesure la position des points 35 et calcule celle du point 36. Il est de construction et de programmation élementaires pour l'homme du métier et ne sera donc pas décrit ici. Dans une réalisation envisagée où le réseau de détecteurs 33 comprend 1024 détecteurs de chaque côté, correspondant à autant de points d'image et de 23 µm de côté, dont chacun embrasse environ 13,5 secondes d'arc, on fait en sorte que les points lumineux 35 s'étendent sur trois détecteurs. Le point 36 peut être alors calculé avec une incertitude de position équivalant à une incertitude angulaire de deux secondes d'arc.

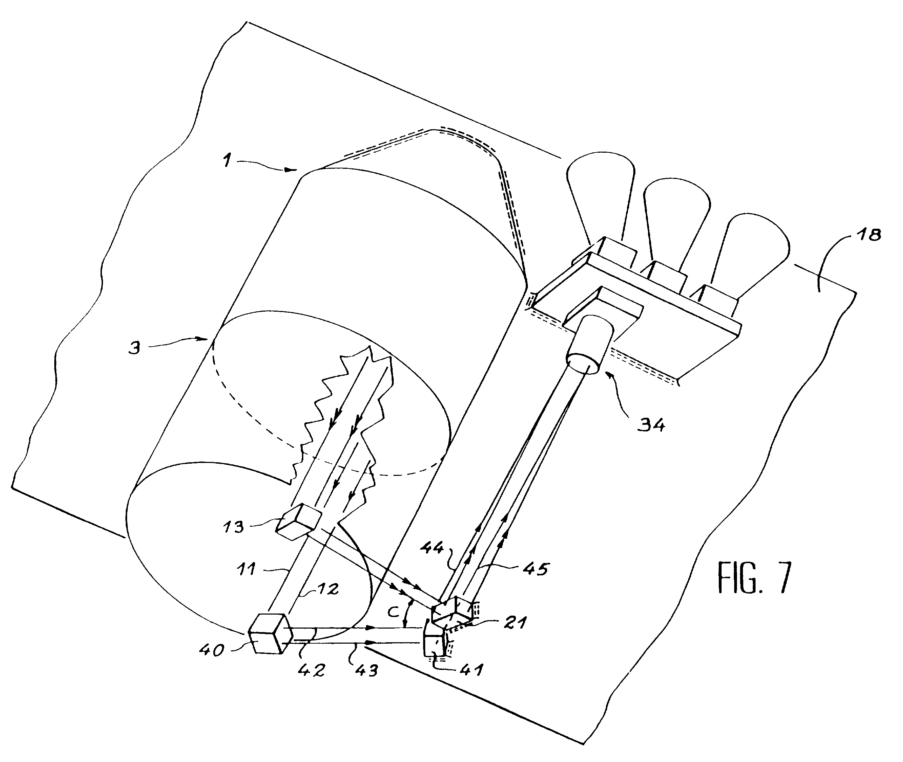

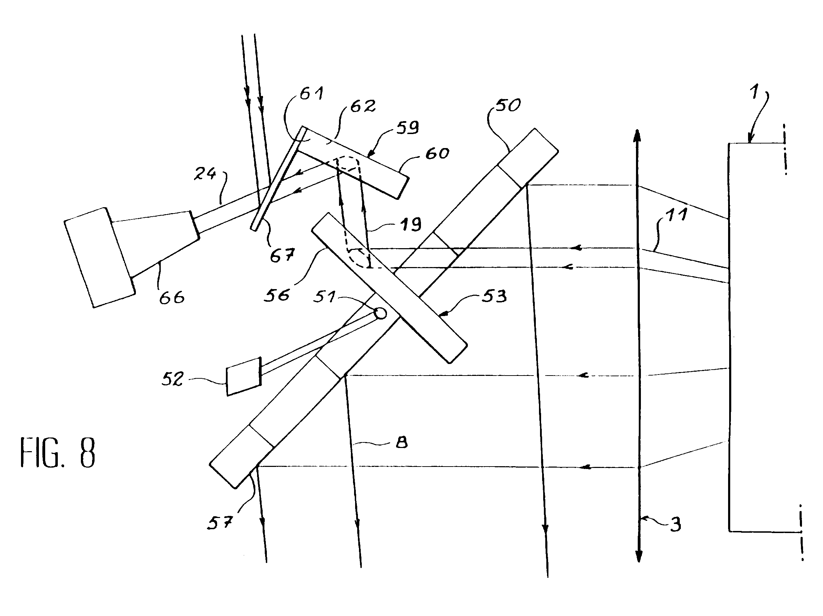

Il est vrai que le point 36 ne correspondra pas au point atteint par un rayonnement émis dans l'axe de visée, à cause des rotations possibles des dièdres 13 et 21. Délaissons pour l'instant la figure 6 pour la figure 7 afin d'expliquer comment ce problème est résolu. On dispose simplement un autre dispositif de renvoi semblable au premier et composé en particulier de deux dièdres 40 et 41 semblables aux dièdres 13 et 21, et qui interceptent une autre portion des faisceaux 11 et 12 pour les renvoyer vers le capteur d'alignement 34. On retrouve en particulier des faisceaux réfléchis 42 et 43 entre les nouveaux dièdres 40 et 41, et des faisceaux de retour 44 et 45 entre le nouveau second dièdre 41 et le capteur d'alignement 34. Le rayonnement passant par les nouveaux dièdres 40 et 41 s'étend dans un plan différent de celui des anciens dièdres 13 et 21 : on désire en vérité que ces plans fassent un angle aussi proche que possible de l'angle droit, mais on peut se contenter d'un angle C de 60° par exemple selon les contraintes d'aménagement et en particulier la largeur des faisceaux 11 et 12 et l'éloignement des seconds dièdres 21 et 41 et du capteur d'alignement 34 de l'instrument 1.

Le nouveau système de dièdres 40 et 41 projette un second motif de points lumineux 46 sur le réseau de détecteurs 33, dont le centre 47 peut être calculé. Il s'agit d'une seconde image des points lumineux 5, dont l'éloignement de la première image formée des points lumineux 35 dépend des rotations subies par les faisceaux de retour 25, 26 et 44, 45. On a vu que ces rotations appartiennent à des plans bien définis, ici sécants grâce à l'angle C des deux systèmes de dièdres 13, 21 et 40, 41. Il suffit donc de calculer les droites D1 et D2 le long desquelles les centres 36 et 47 se déplacent à cause de ces rotations pour déduire la direction de l'axe de visée A. Si en effet une calibration préliminaire du système avait donné des centres d'images 36ₒ et 47ₒ, il suffit de mesurer les écarts dl et d2 des points 36ₒ et 36, et 47ₒ et 47, après une translation parallèle respectivement aux droites D1 et D2, c'est-à-dire que l'écart dl par exemple est la distance du point 36ₒ à sa projection orthogonale du point 36ₒ sur la droite D1 passant par 36. On pourra estimer la direction de visée A avec une precision de cinq secondes d'arc après un calcul approprié.

Le capteur d'alignement 34, doté d'un faible champ de vue pour un instrument 1 nominalement fixe sur le véhicule 18 et dont l'axe de visée ne bouge guère avec le temps par rapport au véhicule, ne reçoit que le rayonnement de la source de lumière et ne possède donc pas de référence d'orientation propre. On le complète par des capteurs stellaires 49 qui lui sont solidaires et sont disposés de façon à observer à tout instant le rayonnement d'une étoile. Un aménagement intéressant consiste à disposer le capteur d'alignement 34 et les capteurs stellaires 49 sur les deux faces d'une platine 90 rigidement liée au véhicule 18. Dans cette application où le véhicule 18 est un satellite artificiel et l'instrument 1 observe la Terre ou un autre astre que le véhicule 18 survole, les capteurs stellaires 49 sont dirigés à l'opposé de l'instrument 1, vers le ciel, et le capteur d'alignement 34 doit donc être dirigé vers l'astre. C'est pourquoi le rayonnement des sources lumineuses doit être réfléchi à 180° et qu'une paire de dièdres par image sur le réseau de détecteurs 33 est utilisée.

On peut aussi concevoir de ne pas utiliser un nombre suffisant de capteur stellaires 49 pour délivrer à tout instant la position du capteur d'alignement 34. On utiliserait alors des capteurs stellaires 49 qui ne permettraient que de faire une mesure d'orientation de temps en temps, en les complétant par un capteur gyroscopique ou autre qui suppléerait à leurs mesures le reste du temps.

On passe maintenant à la figure 8 où il est expliqué comment un système conforme à l'invention peut être mis en oeuvre avec un instrument 1, identique par ailleurs à celui des figures précédentes, et muni en outre d'un système optique 3 et de sources lumineuses 5, d'un miroir de changement de visée 50 qui tourne autour d'un axe 51 sous l'action d'un moteur 52, réfléchit la lumière originaire d'une direction de visée, variable avec l'orientation du miroir de changement de visée 50, vers l'instrument 1.

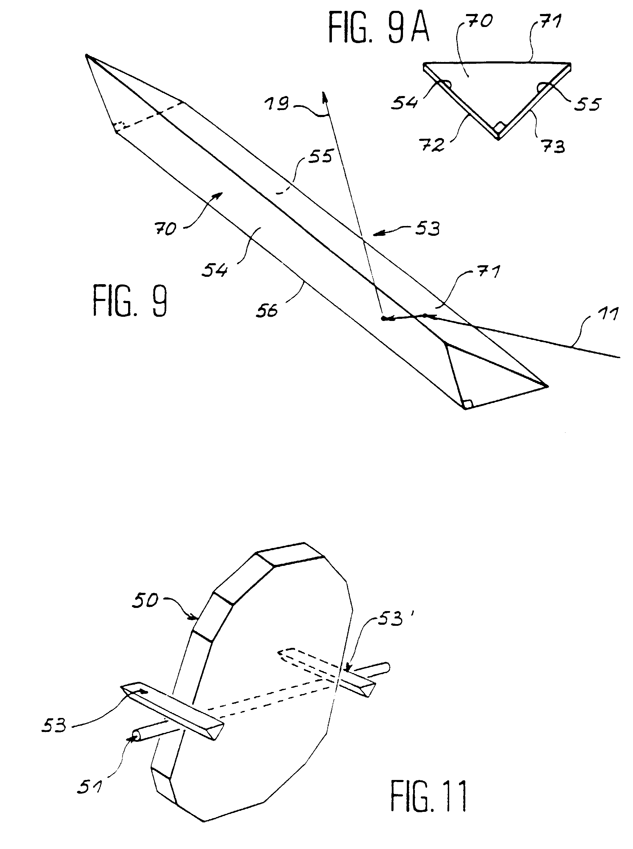

On fixe un premier dièdre 53 à un côté du miroir de changement de visée 50, et ce premier dièdre 53 est représenté en détail à la figure 9. Il est essentiellement composé de deux facettes 54 et 55 à angle droit se joignant par une arête 56 perpendiculaire à l'axe de rotation 51 et à la surface réfléchissante 57 du miroir de changement de visée 50. Comme dans la réalisation précédente, les faisceaux originaires des sources lumineuses sont réfléchis sur l'une des facettes 54 (ou 55), puis sur l'autre 55 (ou 54) et sortent du premier dièdre 53 sous forme de faisceaux réfléchis. On n'a représenté ici que le faisceau 11 et le faisceau réfléchi 19.

La forme du premier dièdre 53 combinée à sa position sur le miroir de changement de visée 50 lui confère des propriétés optiques intéressantes à l'égal de celles des dièdres 13 et 21 quoique un peu différentes. Tout d'abord, les translations accidentelles du premier dièdre 53 ne modifient pas la direction au faisceau réfléchi 19, pas plus que les rotations autour de l'arête 56. Le faisceau 19 réfléchi reste parallèle à la direction de visée B et opposé à cette dernière, car l'arête 56 est perpendiculaire à la surface réfléchissante 57. Il faut remarquer que l'invention reste praticable si l'arête 56 n'est pas rigoureusement perpendiculaire à cette surface tout en faisant un angle constant avec elle, car le faisceau réfléchi 19 garde un angle constant avec la direction de visée B.

On peut encore prévoir un second dièdre 59 dont la forme est identique à celle du premier dièdre 53, et dont l'arête 60 est coplanaire à l'arête 56 et à peu près de même direction. Les facettes réfléchissantes des deux dièdres 53 et 59 se font face, de sorte que le faisceau réfléchi 19 est réfléchi par les facettes 61 et 62 du second dièdre 59 pour être à nouveau réfléchi sous forme du faisceau de retour 24 vers un capteur d'alignement 66. Le second dièdre 59 est immobile par rapport à l'instrument d'observation 1 et donc au satellite.

Voici comment on peut justifier le second dièdre 59. Comme le débattement angulaire du miroir de changement de visée 50 peut avoir une amplitude importante, comme 27° (±13,5°) sur le satellite Spot, le capteur d'alignement 66 doit avoir un champ de vue plus large que dans la réalisation précédente, car le faisceau réfléchi 19 ou de retour 24 a une direction qui varie du double de cette amplitude à cause de la réflexion sur le dièdre 53. Il est donc utile d'utiliser un capteur stellaire comme capteur d'alignement 66, en lui faisant détecter des étoiles de référence en sus de l'image de la source lumineuse. On recourt alors à une construction déjà utilisée dans la demande précédente, mais qui impose d'orienter convenablement le capteur d'alignement. Si l'instrument 1 est pointé à peu près vers l'horizon de l'axe et si le miroir de changement de visée impose sensiblement une réflexion à angle droit de la lumière arrivant à l'instrument 1 de sorte que l'axe de visée B soit dirigé vers le nadir, le faisceau réfléchi 19 est dirigé vers le zénith, et le second dièdre 59 le dévie vers l'horizon ou vers l'astre. L'ouverture du capteur d'alignement 66 est alors pointée vers une portion du ciel. En pratique, on doit disposer ici d'une lame semi-réfléchissante 67 devant lui, perpendiculaire à l'arête du second dièdre 59 de manière que la lumière du faisceau réfléchi 24 le traverse, alors que la lumière des étoiles d'une partie du ciel est réfléchie vers le capteur d'alignement 66 en atteignant l'autre face de la lame semi-réfléchissante 67.

On revient à la figure 9 pour expliquer comment le dièdre 53 est construit. Il s'agit en réalité d'un prisme de quartz 70 à section triangulaire, délimité principalement par les facettes réfléchissantes 54 et 55 perpendiculaires entre elles et par une facette transparente 71 par laquelle la lumière entre dans le prisme de quartz 70 et le quitte après avoir été réfléchie. Les facettes réfléchissantes 54 et 55 sont rendues telles par une métallisation du prisme de quartz 70 qui les recouvre d'une couche réfléchissante 72 ou 73.

Les autres dièdres rencontrés dans ce texte peuvent tous être construits de la même façon, avec un prisme de quartz à deux facettes métallisées. Cependant, les dièdres 13, 21, 13' et 21' pourront avoir une section quadrilatérale composée encore d'une facette d'entrée de la lumière, 74 et 74' pour les dièdres 13 et 13', et d'une facette de sortie de la lumière, respectivement 75 et 75' pour les mêmes dièdres (figures 3 et 4). Même si un prisme est déplacé par une rotation, les effets de la réfraction aux facettes d'entrée et de sortie s'équilibrent, de sorte que le faisceau réfléchi reste à angle droit avec le faisceau incident. La facette transparente 71 et plane du dièdre 53 a le même effet d'équilibrage des réfractions.

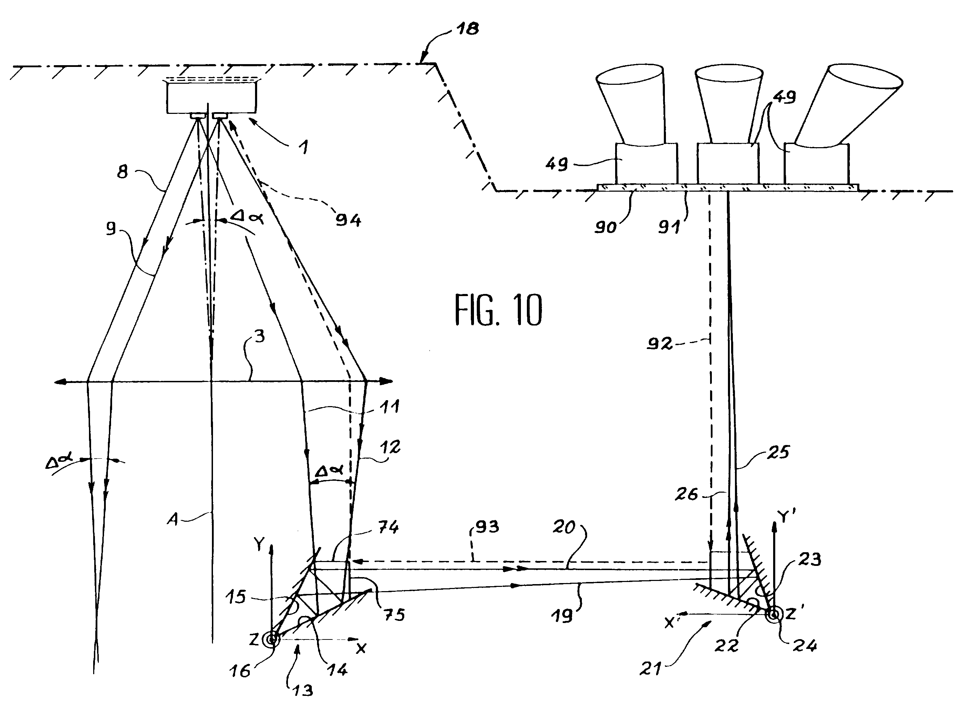

On termine la description sur quelques variantes d'exécution des solutions principales exposées jusqu'ici qui ne concernent pas l'invention. C'est ainsi que le système de la figure 3 peut être remplacé par celui de la figure 10, qui en diffère par l'omission du capteur d'alignement 34. La platine 90 portant les capteurs stellaires 49 est alors munie d'une face réfléchissante formant un miroir 91 à l'endroit du capteur d'alignement 34. Les faisceaux de retour 25 et 26 sont réfléchis par le miroir 91 vers les dièdres 21, 13 et enfin vers l'instrument 1 selon des faisceaux rétrogrades, successivement 92, 93 et 94 qui ne sont qu'esquissés car leurs règles de parcours sont semblables à celles des faisceaux émis vers le miroir 91.

L'instrument 1 est alors lui-même chargé de mesurer son orientation sur le véhicule 18 et plus précisément par rapport à la platine 90 qui sert de référence. Les défauts d'orientation des dièdres 13 et 21 n'ont pas ici de conséquence à cause de la compensation de déviation que les faisceaux rétrogrades 92 à 94 subissent : les déplacements de l'image des points lumineux 5 sur l'instrument 1, calculés à partir d'une image de référence obtenue pendant une calibration préliminaire du système, ne dépendent que de la rotation de l'instrument 1 de l'axe de visée A depuis cette calibration. Il faut évidemment que l'instrument 1 convienne à cette détection, notamment en possédant un champ de vision suffisant. C'est pourquoi la barrette de détecteurs 4 risque d'être trop étroite et devra probablement être remplacée par un réseau rectangulaire ou carré de détecteurs, comme celui 37 du capteur d'alignement 34. Ou bien, on peut conserver un instrument 1 à champ de vision étroit en augmentant le nombre de points lumineux 5 pour s'assurer que deux au moins seront toujours aperçus par l'instrument 1. On prendra alors garde de pouvoir les distinguer dans ces conditions soit par une disposition suffisamment irrégulière, soit par des longueurs d'onde différentes.

La solution de la figure 10 présente les inconvénients d'exiger en pratique de plus gros dièdres, pour intercepter les faisceaux rétrogrades 92 et 93, et un réglage précis de la distance focale du système optique 3, mais permet de ne pas employer de capteur d'alignement 34. Bien qu'elle ne soit pas préférée aujourd'hui, on ne doit pas exclure un changement d'appréciation plus tard.

La figure 11 montre un aménagement du système de la figure 8, qui offre de l'intérêt pour les miroirs à changement de visée 50 à grand débattement angulaire pour lesquels il faudrait allonger le dièdre 53, voire le second dièdre 59. Le miroir de changement de visée 50 est alors flanqué du dièdre 53 et d'un dièdre de complément 53', qui est semblable au précédent mais quelque peu basculé par rapport à lui autour de l'axe de rotation 52. Grâce à cette disposition, une partie des faisceaux tels que 11 est interceptée et réfléchie par le dièdre 53 pour une partie de la course angulaire du miroir de changement de visée 50 et une autre partie des faisceaux et interceptée et réfléchie par le dièdre complémentaire 53' pour le reste de la course angulaire. Il peut y avoir une portion médiane de course pour laquelle la mesure est faite sur les deux dièdres 53 et 53' à la fois. Il existe un capteur stellaire 66 pour chacun des dièdres 53 et 53', ou au contraire un seul capteur stellaire 66, si les dièdres 53 et 53' sont disposés du même côté du miroir de renvoi.

## Revendications

1. Système de repérage d'orientation d'un instrument d'observation (1) comprenant une source (5) de lumière solidaire de l'instrument (1) émettant un motif lumineux au plan focal de l'instrument, un système de renvoi de lumière à miroirs, et un capteur de lumière (66) muni d'une référence d'orientation, le système de renvoi étant conçu pour transmettre la lumière de la source au capteur, les miroirs comprenant un dièdre à deux facettes sur lesquelles la lumière de la source est successivement réfléchie, caractérisé en ce que le système de repérage comprend un miroir de changement de visée (50) tournant devant l'instrument, et en ce que le dièdre (53) est solidaire du miroir de changement de visée (50) tournant devant l'instrument, les facettes réfléchissantes (54, 55) du dièdre faisant un angle droit et se joignant par une arête (56) perpendiculaire au plan du miroir de changement de visée.

2. Système de repérage selon la revendication 1, caractérisé en ce que le dièdre est un prisme à section triangulaire à angle droit, délimité par les facettes réfléchissantes et par une facette transparente (55) par laquelle la lumière de la source entre dans le prisme et en sort, les facettes réfléchissantes étant réalisées par un revêtement du prisme.

3. Système de repérage suivant l'une quelconque des revendications 1 et 2, caractérisé en ce que le système de renvoi comprend un second prisme (59) fixe par rapport à l'instrument et renvoyant vers le capteur (66) la lumière de la source renvoyée par le dièdre (53) fixé au miroir (50), les facettes réfléchissantes (61, 62) du prisme faisant un angle droit et se joignant par une arête (60) coplanaire à l'arête du dièdre fixé au miroir, le capteur de lumière étant un capteur stellaire.

4. Système de repérage suivant la revendication 3, caractérisé en ce que le second prisme est muni d'une lame semi-réfléchissante (67) traversée par la lumière ce la source et réfléchissant une lumière d'étoiles.

5. Système de repérage suivant la revendication 4, caractérisé en ce que le plan de la lame semi-réfléchissante est solidaire de l'arête du second prisme et perpendiculaire à elle.

6. Système de repérage suivant la revendication 1, caractérisé en ce qu'il comprend un deuxième système de renvoi vers un capteur de lumière, le deuxième système de renvoi comprenant un dièdre (53') à deux facettes réfléchissantes formant un angle droit et se joignant par une arête perpendiculaire à l'axe de rotation du miroir de changement de visée, les arêtes des dièdres (53, 53') n'étant pas parallèles, les systèmes de renvoi étant- utiles pour des portions différentes de course angulaire du miroir de changement de visée, un système optique étant placé entre l'instrument et les dièdres pour défocaliser la lumière de la source et pour former un faisceau lumineux élargi, les dièdres interceptant des portions différentes du faisceau élargi.

## Patentansprüche

1. Ausrichtvorrichtung eines Beobachtungsinstrumentes (1), eine mit dem Instrument (1) verbundene, ein Lichtmuster in die Fokalebene des Instruments abstrahlende Lichtquelle (5), ein Lichtrückstrahlsystem mit Spiegeln und einen Lichtsensor (66) umfassend, ausgestattet mit einem Ausrichtungsbezugssystem, wobei das Rückstrahlsystem so konzipiert ist, daß es das Licht der Quelle zum Sensor überträgt und die Spiegel ein Dieder bzw. Zweiflach mit zwei Facetten umfassen, auf denen das Licht der Quelle nacheinander reflektiert wird,
**dadurch gekennzeichnet,**
daß die Ausrichtvorrichtung einen vor dem Instrument drehbaren Blickrichtungs-Verstellspiegel (50) umfaßt, und dadurch, daß das Dieder (53) mit dem vor dem Instrument drehbaren Blickrichtungs-Verstellspiegel (50) verbunden ist, wobei die reflektierenden Facetten (54, 55) des Dieders einen rechten Winkel bilden und sich in einer zur Ebene des Blickrichtungs-Verstellspiegels senkrechten Kante (56) vereinigen.

2. Vorrichtung nach Anspruch 1, dadurch gekennzeichnet, daß das Dieder ein Prisma ist, dessen Querschnitt ein rechtwinkliges Dreieck bildet, begrenzt durch die reflektierenden Facetten und durch eine transparente Facette (55), durch die das Licht der Quelle in das Prisma eintritt und austritt, wobei die reflektierenden Facetten durch eine Beschichtung des Prismas hergestellt werden.

3. Vorrichtung nach einem der Ansprüche 1 und 2, dadurch gekennzeichnet, daß das Rückstrahlsystem ein zweites Prisma (59) umfaßt, das in bezug auf das Instrument feststehend ist und das Licht der Quelle, zurückgestrahlt durch das an dem Spiegel (50) befestigte Dieder (53), zurückstrahlt in Richtung des Sensors (66), wobei die reflektierenden Facetten (61, 62) des Prismas einen rechten Winkel bilden und sich in einer zu der Kante des am Spiegel befestigten Dieders koplanaren Kante (60) vereinigen, wobei der Lichtsensor ein Sternsensor ist.

4. Vorrichtung nach Anspruch 3, dadurch gekennzeichnet, daß das zweite Prisma mit einem semireflektierenden Plättchen (67) ausgerüstet ist, das von dem durch die Quelle abgestrahlten Licht durchquert wird und ein Sternenlicht reflektiert.

5. Vorrichtung nach Anspruch 4, dadurch gekennzeichnet, daß die Ebene bzw. Fläche des semireflektierenden Plättchens mit der Kante des zweiten Prismas verbunden ist und senkrecht zu dieser ist.

6. Vorrichtung nach Anspruch 1, dadurch gekennzeichnet, daß sie ein zweites Rückstrahlsystem auf einen Lichtsensor umfaßt, wobei das zweite Rückstrahlsystem ein Dieder (53') mit zwei reflektierenden Facetten umfaßt, die einen rechten Winkel bilden und sich in einer zur Drehachse des Blickrichtungs-Verstellspiegels senkrechten Kante vereinigen und, da die Kanten der Dieder (53, 53') nicht parallel sind, die Rückstrahlsysteme für verschiedene Teile des Winkelhubs bzw. -bereichs des Blickrichtungs-Verstellspiegels verwendbar sind, wobei ein optisches System sich zwischen dem Instrument und den Diedern befindet, um das Licht der Quelle zu defokussieren und einen verbreiterten Lichtstrahl zu bilden und dabei die Dieder unterschiedliche Teile des Lichtstrahls auffangen.

## Claims

1. Orientation location system for an observation instrument (1) comprising a light source (5) integral with the instrument (1) and emitting a light pattern in the focal plane of the instrument, a mirror light reflecting system, and a light sensor (66) provided with an orientation reference, the reflecting system being designed to transmit light of the source to the sensor, the mirrors incorporating a dihedron having two facets on which the light of the source is successively reflected, characterized in that the location system comprises a sighting change mirror rotating in front of the instrument and in that the dihedron (54) is integral with the sighting change mirror (50) rotating in front of the instrument, the reflecting facets (54, 55) of the dihedron forming a right angle and joining by an edge (56) perpendicular to the plane of the sighting change mirror.

2. Location system according to claim 1, characterized in that the dihedron is a right-angled, triangular section prism, defined by reflecting facets and by a transparent facet (55) by which the light of the source enters and leaves the prism, the reflecting facets being provided by a coating of the prism.

3. Location system according to either of the claims 1 and 2, characterized in that the reflecting system comprises a second prism (59) fixed with respect to the instrument and reflecting to the sensor (68) the light of the source reflected by the dihedron (53) fixed to the mirror (50), the reflecting facets (61, 62) of the prism forming a right angle and joining by an edge (60) coplanar to the edge of the dihedron fixed to the mirror, the light sensor being a stellar sensor.

4. Location system according to claim 3, characterized in that the second prism is provided with a semireflecting strip (67) traversed by the light of the source and reflecting light from the stars.

5. Location system according to claim 4, characterized in that the plane of the semireflecting strip is integral with the edge of the second prism and perpendicular thereto.

6. Location system according to claim 1, characterized in that it comprises a second system for reflecting towards a light sensor, the second reflecting system incorporating a dihedron (53') having two reflecting facets forming a right angle and joining by an edge perpendicular to the rotation axis of the sighting change mirror, the edges of the dihedrons (53, 53') not being parallel, the reflecting systems being useful for different angular travel portions of the sighting change mirror, an optical system being placed between the instrument and the dihedrons for defocussing the light of the source and for forming a widened light beam, the dihedrons intercepting different portions of the widened beam.
